# EUROPÄISCHE PATENTSCHRIFT

(11) **EP 2 564 946 B1**
(45) Veröffentlichungstag und Bekanntmachung des Hinweises auf die Patenterteilung: **24.09.2014**
(21) Anmeldenummer: 12005776.5
(22) Anmeldetag: 09.08.2012
(51) Int. Cl.: B08B 5/02, B08B 9/08, B29C 47/10, B29C 47/00, B29C 47/92, B29C 47/08

(54) **Verfahren zum Reinigen von Dosiervorrichtungen, die zum Beschicken von Vorrichtungen - zum Beispiel Extruder, Spritzgussmaschinen oder dergleichen - mit Schüttgütern - Pelletts, Spänen, Granulaten, Pulvern, Flakes, Körnen, Mehl oder dergleichen - dienen, und Vorrichtung zur Durchführung eines derartigen Verfahrens und Steuerung für die Reinigung einer derartigen Dosiervorrichtung**
Method for cleaning metering devices used to fill devices, e.g. extruders, injection moulding machines or the like with bulk goods - pellets, fillings, granulates, powders, flakes, grains, flour or the like, and device for performing such a method and control for cleaning such a metering device
Procédé de nettoyage de dispositifs de dosage servant au remplissage de dispositifs (par exemple installation d'extrusion, machines de moulage par injection ou analogues) avec des produits en vrac (pellets, copeaux, granulés, poudres, flocons, grains, farine ou analogues) et dispositif de réalisation d'un procédé de ce type et commande pour le nettoyage d'un dispositif de dosage de ce type

(30) Priorität: 30.08.2011 DE 102011112016
(43) Veröffentlichungstag der Anmeldung: 06.03.2013
(73) Patentinhaber: Woywod Kunststoffmaschinen GmbH & Co. Vertriebs KG, 82166 Gräfelfing bei München (DE)
(72) Erfinder: Bollschweiler, Reinhold, 98000 Monaco (MC)
(74) Vertreter: Beyer, Rudi

(56) Entgegenhaltungen:
- EP-A1- 2 354 056
- DE-B3-102008 055 756

## Beschreibung

### Gattung

Die Erfindung betrifft ein Verfahren zum Reinigen von Dosiervorrichtungen, die zum Beschicken von Vorrichtungen - zum Beispiel Extruder, Spritzgussmaschinen oder dergleichen - mit Schüttgütern - Pellets, Spänen, Granulaten, Pulvern, Flakes, Körnern, Mehl oder dergleichen - dienen.

Des Weiteren betrifft die Erfindung eine Vorrichtung zum Durchführen eines derartigen Verfahrens und eine Steuerung für eine solche Dosiervorrichtung.

### Stand der Technik

Dosiervorrichtungen dieser Art gehören zum Stand der Technik. Sie werden zum Beispiel zum Beschicken von Mischern, Mühlen und dergleichen mit Granulat wie Kunststoffgranulaten oder dergleichen, verwendet, beispielsweise auch um Farbkomponenten zu mischen. Die Zuführung erfolgt in der Regel über einen Trichter oder Zuführschlauch, der über einen Flansch an ein Gehäuse angeschlossen ist, das an der Anschlussstelle eine quadratische oder annähernd quadratische Ausbildung besitzt. Infolgedessen kommt es hier zu toten Zonen, in denen sich Nester bilden können, die den Materialfluss und damit den Durchfluss des zu fördernden Materials behindern. Auch die in den vertikalen Zuführkanal hineinragende Lagerung der Förderschnecke stört den Durchfluss des Schüttguts ebenfalls, da hier Schüttgut liegen bleiben oder festkleben kann, so dass auch hierdurch die Entleerung des Zuführkanals und damit ein ungestörter Durchfluss des Schüttguts behindert wird.

Aus der DE 196 29 824 A1 ist eine Fördereinrichtung für pulver- oder granulatförmige Feststoffe vorbekannt mit einer ein- oder mehrwelligen Förderschnecke und einem Aufgabeschacht, wobei zwischen dem Gehäuse der ein- oder mehrwelligen Förderschnecke und dem Aufgabeschacht ein die Schnecke(n) umschließendes Befeuchtungsbauteil zur Eindosierung einer Flüssigkeit in den Schneckenraum angeordnet ist, das aus einem Gehäusering mit mindestens einer Flüssigkeitszuführung und einem in dem Gehäusering einschiebbaren ringförmigen Düseneinsatz besteht, wobei zwischen dem Gehäusering und dem Düseneinsatz ein mit der Flüssigkeitszuführung verbundener Ringraum verbleibt. Der Düsenseinsatz ist mit Düsenbohrungen versehen, die den Ringraum mit dem Schneckenraum verbinden. Die Innenkontur des Düseneinsatzes ist kreisförmig, wobei die Bohrungen gleichmäßig über den Umfang verteilt entlang der Innenkontur angeordnet sind. Die Innenkontur des Düseneinsatzes ist brillenförmig gestaltet und dem Schneckenraum angepasst. Dabei sind die Düsenbohrungen am Düseneinsatz im Wesentlichen achsenparallel ausgeführt, wobei an dem Gehäusering eine ringförmige, schräg stehende Leitfläche derart angeordnet ist, dass die aus den Düsenbohrungen austretenden Flüssigkeitsstrahlen auf die Leitflächen auftreffen und von dort in den Schneckenraum umgelenkt werden. Die Leitflächen sind unter einem Winkel von 30° bis 45° gegen die Achse angebracht. Hierdurch soll die Befeuchtung vereinfacht werden, wobei das Produkt reproduzierbar und gleichmäßig befeuchtet werden kann. Im Übrigen könne man die Befeuchtung kontinuierlich vornehmen bei geringer Staubentwicklung.

Aus der GB 2 182 628 A ist eine Vorrichtung zum kontrollierbaren Zuführen von Granulat vorbekannt. Hierzu weist ein rohrförmiges Gehäuse ein mit seiner Längsachse orthogonal dazu angeordnetes Zuführrohr auf, auf dem ein Trichter angeordnet ist. Ein Motor treibt eine in dem rohrförmigen Rohr angeordnete Förderschnecke an, die in ein auf der gegenüberliegenden Seite des Zufuhrrohres, ebenfalls mit seiner Längsachse orthogonal zur Längsachse der Förderschnecke angeordnetes Auslassrohr austrägt.

Die GB 666,686 A beschreibt eine Vorrichtung zum Transportieren von brennbarem Material, zum Beispiel Koks oder Kohle in einem rohrförmigen Gehäuse mit einem schneckenartigen, motorisch angetriebenen Element, dem durch einen Fördertrichter von oben das Fördergut zugeführt wird.

Bisherige Dosiergeräte haben meist eine Einzugszone mit rechteckigem Querschnitt. Der Vorratstrichter über der Einzugszone hat teilweise ebenfalls einen rechteckigen Querschnitt im Trichterauslauf. Es werden auch Trichter mit rundem Auslauf und entsprechende Anpassstücke verwendet. Die rechteckige Einzugszone ist meist unbearbeitet in roh gegossener Ausführung, eine Bearbeitung zum Glätten der Flächen ist zu viel Aufwand. Die Entleerung unter der Einzugszone ist teilweise mit einer Klappe, teilweise mit ebenfalls rechteckigem Querschnitt mit konischer Verjüngung, teilweise auch stufig in Flussrichtung, versehen. Auch der Übergang von der senkrecht verlaufenden Einfüllzone zum waagrecht verlaufenden Schneckenrohr ist flusstechnisch durch Kanten und Hinterschnitte nicht gut ausgebildet. Schließlich befindet sich am hinteren Ende der Schnecke die Schneckenlagerung, die in die Einfüllzone ragt. Insgesamt sind diese bisherigen Konstruktionen nicht geeignet, um ein Dosiergerät und den über der Einzugszone angeordneten Vorratstrichter restlos zu entleeren, und Körner und Partikel, die insbesondere durch elektrostatische Aufladung auch an senkrechten Wänden haften, mittels Druckluftstößen zu entfernen.

Erst die Dosiervorrichtung nach DE 10 2008 055 756 B3 ermöglicht eine bessere Entleerung und Reinigung, da dieses Gerät ausschließlich mit runden, glatten, stufenlosen Flusskanälen, und wenn nötig, steilen Übergangswinkeln, versehen ist. Hierzu beschreibt die DE 10 2008 055 756 B3 eine Dosiervorrichtung zum Beschicken von Vorrichtungen wie zum Beispiel Extrudern, Spritzgussmaschinen oder dergleichen, mit Schüttgütern wie Pellets, Spänen, Granulaten, Pulvern, Flakes, Körnern, Mehl oder dergleichen, mit einem Gehäuse, das auf je zwei gegenüberliegenden Seiten kreisrunde Anschlussöffnungen aufweist, deren Mittelpunkte jeweils paarweise koaxial zueinander angeordnet sind und die sprunglos in Kanäle mit jeweils gleichem Durchmesser einmünden, deren Längsachsen entsprechend jeweils paarweise koaxial zueinander angeordnet sind, wobei von oben das Schüttgut über einen Anschlussstutzen mit gleichem Durchmesser sprunglos in einen Zuführkanal zuförderbar ist und seitlich am Gehäuse eine Antriebsmotoreinheit über eine Förderschnecke angeordnet ist, die fliegend an einem kegelstumpfförmigen Dichtkörper angeordnet ist, der mit einem Außenteil sprunglos entsprechend der Durchdringungskurve des hier vorgesehenen seitlichen Kanals und des ihn mit seiner Längsachse orthogonal durchdringenden vertikalen Zuführkanals mit der Innenwand des vertikalen Zuführkanals abschließt und mit einem in Achsrichtung der Förderschnecke angeordneten, im Gehäuse angeordneten Innenteil axiale und radiale Beanspruchungen der Förderschnecke aufnimmt.

Des Weiteren beschreibt die DE 10 2008 055 756 B3 eine Dosiervorrichtung zum Beschicken von Vorrichtungen wie zum Beispiel Extruder, Spritzgussmaschinen oder dergleichen, mit Schüttgütern wie Pellets, Spänen, Granulaten, Pulvern, Flakes, Körnern, Mehl oder dergleichen, mit einem Gehäuse, dass auf je zwei gegenüberliegenden Seiten kreisrunde Anschlussöffnungen aufweist, deren Mittelpunkte jeweils paarweise koaxial zueinander angeordnet sind und die sprunglos in Kanäle mit jeweils gleichem Durchmesser einmünden, deren Längsachsen entsprechend jeweils paarweise koaxial zueinander angeordnet sind, wobei von oben das Schüttgut über einen Anschlussstutzen mit gleichem Durchmesser sprunglos in einen Zuführkanal zuförderbar ist und seitlich am Gehäuse eine Antriebsmotoreinheit für eine Förderschnecke angeordnet ist, die fliegend an einem kegelstumpfförmigen Dichtkörper angeordnet ist, der mit einem Außenteil sprunglos entsprechend der Durchdringungskurve des hier vorgesehenen seitlichen Kanals und des ihn mit seiner Längsachse orthogonal durchdringenden vertikalen Zuführkanals mit der Innenwand des vertikalen Zuführkanals mit dem Außenteil abschließt und mit einem in Achsrichtung der Förderschnecke angeordneten, im Gehäuse angeordneten Innenteil axiale und radiale Beanspruchungen der Förderschnecke aufnimmt, wobei der Dichtkörper zweiteilig ausgebildet ist, und der eine, als Innenteil ausgebildete Teil kegelstumpfförmig mit einem äußeren Ringflansch und Befestigungsmitteln in einem dem Gehäuse zugeordneten Außenteil formschlüssig angeordnet und über einen äußeren Ringflansch und Befestigungsmitteln mit dem Außenteil einstückig verbunden ist, wobei das kegelstumpfförmige Innenteil eine als Gegendruckkörper ausgebildete radiale und axiale Lagerung für die Förderschnecke bildet, wobei das Außenteil mit seinem in den Zuführkanal eindringenden Körperteil entsprechend der Durchdringungskurve eine sprunglose Formgestaltung (Mantelfläche) mit der Zylinderwand des Zuführkanals bildet.

Die DE 39 00 664 C2 beschreibt ein Verfahren zum Reinigen des Rohrmaterial-Beschickungsbehälters einer Maschine zur Verarbeitung im wesentlichen rieselfähiger Rohrmaterialien, insbesondere zum Reinigen des Abscheidebehälters einer Kunststoffverarbeitungsmaschine, bei dem durch den Beschickungsbehälter nach dessen Entleerung stoßartig ein- oder mehrmalig eine wesentliche Luftmenge zum Mitreißen von an der Behälterwand anhaftenden Teilchen geleitet wird. Zur Vorreinigung des Beschickungsbehälters wird zunächst nach Leerung einer Material-Zuführleitung bei geschlossener Auslassöffnung und Zuführleitung im Beschickungsbehälter ein Unterdruck aufgebaut, worauf man Luft durch die Rohrmaterial-Zuführleitung in den Beschickungsbehälter einströmen lässt, wobei im Anschluss an die Vorreinigung im Beschickungsbehälter erneut ein Unterdruck aufgebaut wird, und man anschließend bei geschlossener Rohrmaterial-Zuführleitung schlagartig Luft durch die Auslassöffnung in den Beschickungsbehälter einströmen lässt. Die aus dem Beschickungsbehälter abströmende Reinigungsluft wird einem Staubfilter zugeführt.

Diese Druckschrift betrifft damit ausschließlich die Reinigung eines Materialabscheiders, über den das Granulat mittels Unterdruck aus einem Behälter (Silo) gesaugt und dann in einen unter dem Materialabscheider befindlichen Maschinentrichter abgegeben wird. Der Maschinentrichter muss zum Reinigen über eine Betätigungseinrichtung horizontal vom Maschinentrichter weg zur Seite bewegt werden, was nachteilig erscheint. Eine Reinigung des Maschinentrichters und die Reinigung eines darunter arbeitenden Schnecken-Dosiergerätes lässt diese Druckschrift nicht erkennen.

Aus der DE 696 08 730 T2 ist eine automatische Sacköffnungsvorrichtung für das Öffnen des Bodens eines Sacks und dessen Entleerung vorbekannt, die aus einer Sackabstützplatte und einer Sackauflage besteht, wobei die Sackabstützplatte sich zwischen einer aufrechten und einer schrägen Lage drehen kann, wobei die Sackabstützplatte und die Sackauflage den Sack in eine aufrecht stehende Position bringen können, mit Sackhaltemitteln, um den Sack in der aufrecht stehenden Position zu halten, einem Sackabschneider, der an einem Sackschneideantrieb angeordnet ist, um den Sackschneider anzutreiben, um den Boden des Sacks in der aufrecht stehenden Position zu öffnen, damit der Inhalt des Sacks freigesetzt wird, wobei sich die Sackauflage von dem Boden des Sacks in die Freisetzposition bewegen kann, so dass der Sack von den Sackhaltemitteln gehalten ist und der Inhalt des Sacks freigesetzt wird, mit Mitteln zum Erleichtern des Freisetzen des Inhalts des Sacks, wobei die Vorrichtung ein Gehäuse umfasst, eine Einsetzöffnung für den Sack in dem Gehäuse und die Sackabstützplatte drehbar auf eine Antriebswelle an dem Gehäuse angeordnet ist, wobei die Sackauflage drehbar auf einer Antriebswelle an dem Gehäuse angeordnet ist und sich zwischen einer Anzahl von Auflagepositionen und der Freisetzposition drehen kann, wobei die Sackauflage und die Sackabstützplatte so koordiniert werden können, dass sie den Sack in die aufrecht stehende Position führen und den Sack vor, während und nach der Drehung stützen können, eine Entnahmeöffnung in der Wand des Gehäuses, wenigstens ersten und zweiten Rollen mit einem Abstand dazwischen, wobei der Abstand neben der Entnahmeöffnung angeordnet ist, wobei jede der ersten und zweiten Rollen wenigstens einen Schlitz und wenigstens eine Öffnung aufweisen, wobei der wenigstens eine Schlitz Luft durchlassen kann, die in die wenigstens eine Öffnung eingeblasen wird, einem Sackschieber, der an einem Sackschieberantrieb angeordnet ist, der sich gegenüber dem Abstand befindet, wobei der Sackschieber sich vor- und zurückbewegen kann, um einen Teil eines leeren Sacks zu falten und in den Abstand zu schieben, so dass der leere Sack durch die Sackentnahmeöffnung gefördert wird.

Beschrieben wird ein Schneckenförderer für Pulver jeder nur denkbaren Art, also nicht nur für Kunststoffe, sondern auch für Nahrungsmittel, Chemikalien, Baustoffe, pharmazeutische Produkte, Mineralien, usw. Dabei geht es insbesondere auch um adhäsive (mithin klebrige) Materialien. Es soll dafür gesorgt werden, dass sich das zu fördernde Material nicht an der Innenwand des Schnecken-Zylinders oder an dem Schneckenwendel des Schneckenförderers absetzen oder anhaften kann. Dadurch würde die Verweilzeit für die Materialien zu groß. Bei Lebensmitteln könnte dies zum Verderben der zurückbleibenden Materialien und damit zur Verunreinigung führen. Außerdem soll vermieden werden, dass sich Material zwischen den oberen Spitzen des Schneckenwendels und der Schneckenwand verklemmt und nicht wieder lösen kann. Deshalb wird vorgeschlagen, den Kern der Schnecke als Hohlwelle auszuführen, in der in geeigneter Form öffnungsschlitze eingebracht sind. Über einen Drucklufterzeuger und entsprechende Ventile sowie über eine Steuerung soll während der Materialförderung kontinuierlich Druckluft in den Dosierraum eingeleitet werden. Dieser Luftstrom soll das Anhaften an der Schnecke oder dem Schnecken-Zylinder beseitigen. Eine Reinigung während Produktionspausen oder dem Fördern verschiedener Materialien ist nicht vorgesehen. Im Übrigen handelt es sich bei der Druckschrift um Fördergeräte und nicht um Dosiergeräte. Bei Dosiergeräten ist eine hohe Genauigkeit der zu fördernden Materialien erforderlich.

### Aufgabe

Der Erfindung liegt zunächst die Aufgabe zugrunde, das Reinigen der aus der DE 10 2008 055 756 B3 bekannten Dosiervorrichtung erfinderisch zu verbessern und auch diese Dosiervorrichtung erfinderisch weiterzubilden und außerdem eine hierfür vorteilhafte Steuerung zu schaffen.

### Lösung der Aufgabe betreffend die Verfahrensweise

Die Aufgabe wird durch die in **Patentanspruch 1** wiedergegebenen Merkmale gelöst.

### Einige Vorteile

Bei der Erfindung ist jedem Absperrschieber ein Antriebsmotor zum Steuern der Auf- und Absperrbewegung der Schieber zugeordnet, wobei die Reinigung unter gleichzeitigem Drehantrieb der Förderschnecke geschieht. Gleichzeitig wird in den Zuführtrichter und damit in den Innenraum der Dosiervorrichtung und zur Förderschnecke Druckluft gesteuert eingeleitet. Hierzu ist eine automatische Reinigung der Dosiervorrichtung einschließlich der Schnecke zuverlässig und kurzfristig möglich, ohne dass es auf die Sorgfalt der mit der Reinigung beauftragten Person noch ankommen würde.

### Weitere erfinderische Ausgestaltungen

Weitere erfinderische Ausgestaltungen sind in den **Patentansprüchen 2** bis **4** beschrieben.

Bei der Verfahrensweise nach **Patentanspruch 2** wird die Druckluft zugeführt, wenn sich der die Austragsöffnung der Förderschnecke verschließende Absperrschieber in Absperrstellung befindet, während der die untere Öffnung verschlieβende Absperrkörper in Offenstellung gesteuert wird.

Bei der Verfahrensweise nach **Patentanspruch 3** wird vor Beginn der Reinigung die Austragsöffnung der Förderschnecke durch den Absperrkörper geschlossen und die Austragsöffnung und die Reinigungsöffnung durch den Absperrkörper freigegeben.

Die Antriebe für die Absperrschieber und für die Förderschnecke können in eine programmierbare Folgesteuerung einbezogen sein, wodurch das Auf- und Zusteuern der Absperrschieber und der Zuführung von Druckluft in den Zuführtrichter durch ein änderbares Programm der Folgesteuerung folgerichtig abgerufen wird - **Patentanspruch 4**.

Die Bedienungsperson braucht dabei im Bedarfsfalle nur einen Schalter zu betätigen, woraufhin dann der Reinigungsprozess vollautomatisch durchgeführt wird, und zwar in sehr kurzer Zeit.

### Lösung der Aufgabe betreffend die Vorrichtung

Diese Aufgabe wird durch die im **Patentanspruch 5** wiedergegebenen Merkmale gelöst.

### Einige Vorteile

Die erfindungsgemäß vorgeschlagene Konstruktion gemäß **Patentanspruch 5** baut robust und mit wenigen Einzelteilen.

### Lösung der Aufgabe betreffend die Steuerung

Diese Aufgabe wird durch die im **Patentanspruch 6** wiedergegebenen Merkmale gelöst.

### Einige Vorteile

Über eine geeignete Steuerung, am besten eine SPS, stehen zum Beispiel folgende Funktionen zur Verfügung: Öffnen und Schließen der Entleerungsschieber, Umschalten des Schiebers am Ende des Schneckenrohres von Produktion auf Reinigungsauslauf, Inbetriebsetzen der Dosierschnecke mit einer bestimmten Drehzahl, Öffnen und Schließen der Druckluftdüsen. Alle Funktionen sind sowohl in der Abfolge als auch in der Dauer variabel programmierbar.

Die Absperrschieber können im Übrigen über elektropneumatische Antriebe betätigt werden. Dazu ist unter der Einfüllzone eines Gerätes ein elektropneumatisch betätigbarer Entleerungsschieber mit zwei Stellungen "offen" bzw. "zu" vorgesehen und am Ende des Schneckenrohres kann ein elektropneumatisch betätigbarer Entleerungsschieber mit zwei Stellungen, und zwar ebenfalls "offen" bzw. "zu" vorgesehen sein. Der letztgenannte Schieber kann auch drei Stellungen, zum Beispiel "beide Öffnungen geschlossen", aufweisen.

In der Zeichnung ist die Erfindung - teils schematisch - an einem Ausführungsbeispiel veranschaulicht. Es zeigen:
- Fig. 1: eine diagrammartige Übersicht über den Aufbau einer Einrichtung gemäß der Erfindung und

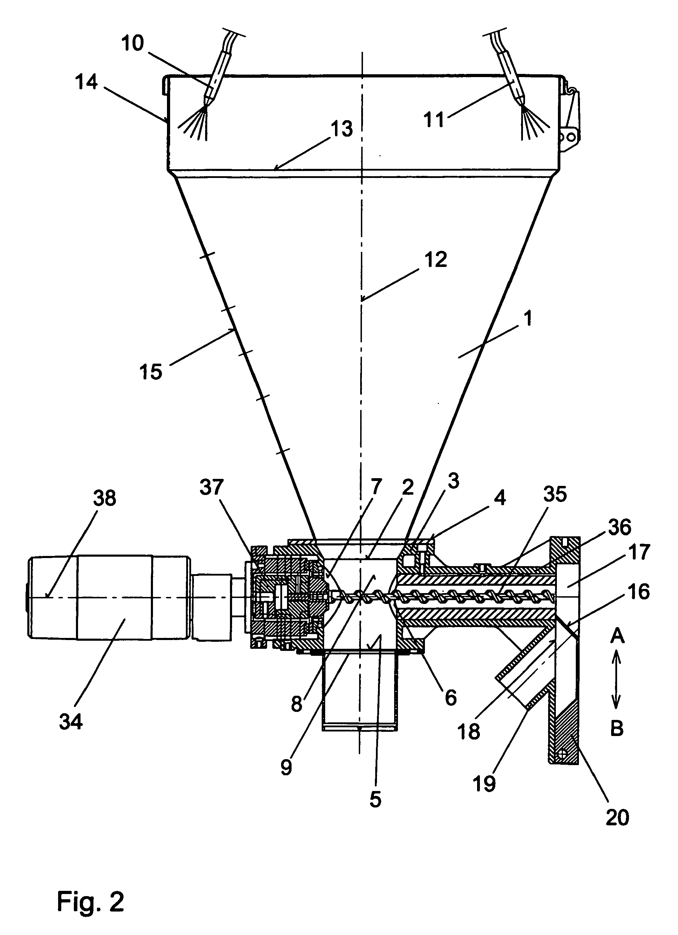

- Fig. 2: einen Einfülltrichter mit Schneckenextruder und Antrieb, teils in der Seitenansicht, teils im Schnitt, im größeren Maßstab.

Mit dem Bezugszeichen 1 ist ein Einfülltrichter bezeichnet, dem von oben geeignetes rieselfähiges Material (Schüttgüter), wie Pellets, Späne, Granulate, Pulver, Flakes, Körner, Mehl oder dergleichen, zugeführt wird. Der Konuswinkel des Einfülltrichters 1 ist so bemessen, dass der Böschungswinkel des zu fördernden Materials überschritten wird und das Material deshalb leicht in die Anschlussöffnung 2 eines Gehäuses 3 nachrutscht. Der Einfülltrichter 1 ist über einen Flansch 4 mit dem Gehäuse 3 fest, aber lösbar, insbesondere durch Schrauben, verbunden.

Auf der der Anschlussöffnung 2 gegenüberliegenden Seite ist dem Gehäuse 3 eine weitere Anschlussöffnung 5 zugeordnet, die ebenso wie die Anschlussöffnung 2 bei der dargestellten Ausführungsform kreisrund ausgebildet ist. Die Anschlussöffnungen 2 und 5 sind koaxial zueinander angeordnet. Die Radien der Anschlussöffnungen 2 und 5 sind bei der dargestellten Ausführungsform gleichgroß. Außerdem münden die Anschlussöffnungen 2, 5 sowie weitere z. B. kreisrunde Anschlussöffnungen 6, 7 in Kanäle oder Kanalabschnitte mit gleichgroßem Durchmesser wie die dazugehörigen Anschlussöffnungen 2, 5 sowie 6, 7, was bedeutet, dass die Anschlussöffnungen 2, 5 sowie 6, 7 sprunglos und somit glattwandig, zylindrisch mit den entsprechenden Durchdringungskurven in die entsprechenden Kanäle oder Kanalabschnitte, einmünden.

Die Ausströmöffnung des Einfülltrichters 1 hat den gleichen Durchmesser wie die Anschlussöffnung 2, so dass sich ebenfalls ein sprungloser Übergang von dem Einfülltrichter 1 oder der sonstigen hier vorgesehenen Zuführungseinrichtung, zum Beispiel einem Zuführschlauch, in die Anschlussöffnung 2 und den sich daran anschließenden vertikalen Zuführkanal 8 ergibt. Die Durchdringungskurven sind so gewählt, dass sich keine Schüttgutnester bilden können.

Die Längsachse 12 des Einfülltrichters 1 einerseits, die durch die Mittelpunkte der Anschlussöffnungen 2 und 5 verläuft und die Längsachse 38, die durch die Mittelpunkte der Anschlussöffnungen 6 und 7 andererseits verläuft, schneiden sich orthogonal, vorzugsweise in der Mitte des Zuführkanals 8 innerhalb des Gehäuses 3.

Mit der Anschlussöffnung 6 des Gehäuses 3 ist bei der dargestellten Ausführungsform ein materialmäßig einstückiger Anschlussstutzen verbunden, der aber auch mit einem nicht dargestellten Flansch schüttgutdicht angeflanscht und abgedichtet sein kann. Dieser Anschlussstutzen ist bei der dargestellten Ausführungsform außen mehreckig ausgebildet, weißt allerdings in seinem Inneren einen durchgehenden, zylindrischen Kanal auf, in dem zum Beispiel ein Reduzierrohr angeordnet ist. Das Reduzierrohr kann aus einem geeigneten Kunststoff, zum Beispiel aus Polyamid, bestehen, das an seiner Außenseite zylindrisch ausgebildet ist. Das Reduzierrohr liegt mit seiner äußeren Mantelfläche satt an der zylindrischen Innenwand eines Kanals in dem rohrförmigen Gehäuse des Anschlußstutzens an. Das Reduzierrohr weist an seiner in der Zeichnung gesehen oberen Seite eine Längsnut auf, in die eine. Arretierschraube mit orthogonaler Längsachse zur Längsachse des Anschlussstutzens von außen einschraubbar ist, um das Reduzierrohr in der vorgesehenen Position zu führen und auch zu arretieren. An seiner nach außen weisenden Stirnseite ist das Reduzierrohr mit einer orthogonal zur Längsachse des Anschlussstutzens verlaufenden Wand versehen, die bündig mit der hier vorgesehenen Stirnseite des Anschlussstutzens abschließt. An seinem entgegengesetzten Ende weist dagegen das Reduzierrohr eine Formgebung auf, die der Durchdringungskurve des Reduzierrohres und des Anschlussstutzens in den Zuführkanal 8 entspricht, derart, dass die Formgebung sprunglos abschließt, so dass sich hier keine Materialnester bilden können oder der Materialtransport behindert wird. Die Wandung des Zuführkanals 8 ist an der Durchdringungskurve praktisch glattwandig ausgebildet, so dass es zu einem ungestörten Materialfluss kommt. Das Reduzierrohr wird bei der dargestellten Ausführungsform koaxial von der Förderschnecke 35 durchgriffen, die fliegend in einem aus einem Außenteil und einem Innenteil bestehenden Dichtkörper (im einzelnen nicht bezeichnet) im Bereich der Öffnung 7 gelagert ist. Der zweiteilige, aber funktionell einstückige, kegelstumpfförmige Dichtkörper, gebildet aus einem als Außenring ausgebildeten Außenteil und einem kegelstumpfförmigen Innenteil ist in der Anschlussöffnung 7 gelagert, wie dies in der DE 10 2008 055 756 B3 im einzelnen beschrieben und dargestellt ist. Das Außenteil weist wie bei der vorbeschriebenen und auf die Anmelderin zurückgehenden Vorveröffentlichung ein ringförmiges Teil mit ein oder zwei axial beabstandeten Nuten zur Aufnahme je einer Dichtung auf, wobei ein flanschförmiges Teil in einer entsprechenden ringförmigen Aussparung der hier vorgesehenen Ringseite des Gehäuses formschlüssig angeordnet ist und hier ebenfalls abgedichtet sein kann. Die Außenseite des ringförmigen Teils kann bündig mit der hier vorgesehenen Außenseite des Gehäuses 3 abschließen. Das Außenteil weist eine kegelstumpfförmige Aussparung zur formschlüssigen Aufnahme des kegelstumpfförmigen Innenteils auf. Das flanschförmige Teil kann über seinen Umfang und mehreren Durchtrittsöffnungen zum Durchgreifen von Schraubbolzen versehen sein (gleichfalls nicht dargestellt), durch die das Außenteil mit dem Innenteil funktionell einstückig, aber lösbar, verbunden ist (siehe DE 10 2008 055 756 B3).

Das als Außenring ausgebildete Außenteil weist an seinem durch die Anschlussöffnung in den Zuführkanal hineinragenden Längenabschnitt eine Formgestaltung auf, die der Durchdringungskurve in den hier vorgesehenen Anschlusskanal entspricht, derart, dass die Formgestaltung des Außenteils glattwandig und demgemäß sprunglos in den Zuführkanal einmündet und mit der Zylinderwand des Zuführkanals sprunglos glattwandig abschließt und dadurch den Materialdurchfluss in keiner Weise behindert.

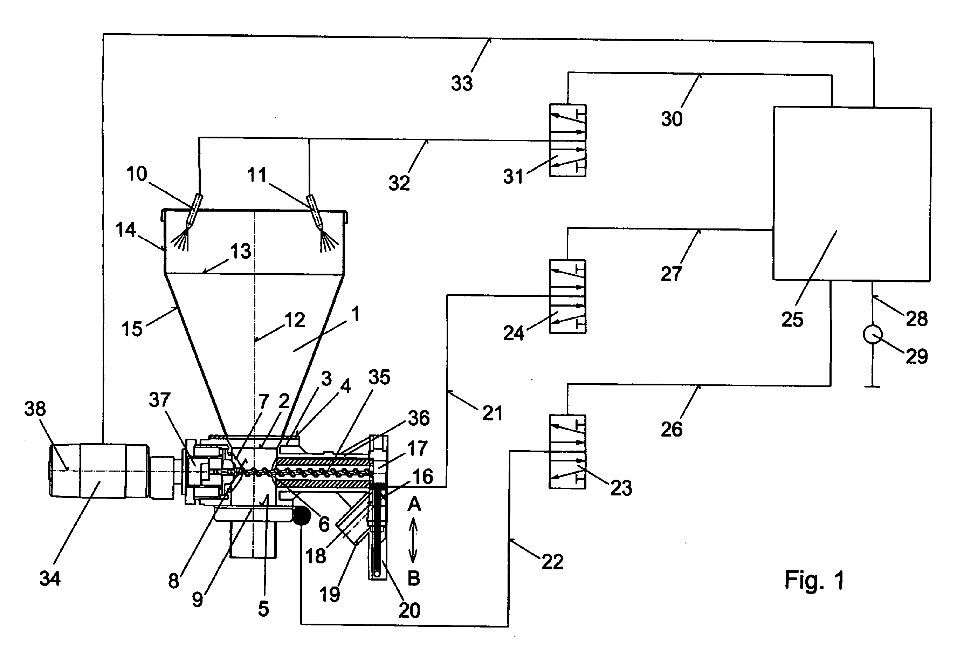

In der kegelstumpfförmigen Aussparung des Außenteils ist das Innenteil formschlüssig angeordnet und bildet ein als Rückdrucklager ausgebildetes Gegendrucklager für die fliegende Lagerung der Förderschnecke. In der in Richtung der Längsachse von oben (in der Zeichnungsebene der Fig. 1 gesehenen Blickrichtung) ragt das kegelförmige Innenteil gar nicht oder kaum in den lichten Querschnitt des Zuführkanals, so dass das Innenteil ebenfalls den Materialdurchfluss durch den Zuführkanal nicht behindert. Auf oder an dem Innenteil kann sich somit kein Material ansetzen oder Nester bilden.

Das Innenteil weist ebenfalls einen Flansch mit über seinen Umfang verteilten Durchgangsbohrungen auf, von denen nur eine aus Gründen der Einfachheit bezeichnet wurde. Die verschiedenen Durchgangsbohrungen können über den Umfang des Flansches mit gleichmäßigen Winkelabständen angeordnet sein. Durch die Durchgangsbohrungen greifen Befestigungsschrauben, die das Innenteil mit dem Außenteil funktionell einstückig, aber lösbar zu einem einheitlichen Dichtkörper verbinden.

Das im wesentlichen kegelstumpfförmige Innenteil besitzt eine zentrische Durchgangsbohrung, in der ein zylindrischer Längenabschnitt der Förderschnecke angeordnet ist, die mit einem Kragen an der Stirnseite des Innenteils dicht anliegt und dadurch den Axialschub auf das Innenteil überträgt. Dadurch erfolgt ebenfalls eine schüttgutdichte Lagerung der Förderschnecke.

Wie man erkennt, ergibt sich durch die besondere Formgestaltung des Endabschnittes des Reduzierrohres und durch die Formgestaltung des Außenteils und durch die Formgestaltung des Innenteils an seinem Konus ein ungestörter Durchfluss für das Material, da der kreisrunde Zuführkanal den gleichen Durchmesser wie die Anschlussöffnung aufweist und sich keine störenden Kanten und Übergänge ergeben. Vielmehr ist der an die Anschlussöffnung angeschlossene Reduzierzylinder oder dergleichen so gearbeitet, dass er zum Zuführkanal 8 und dessen Anschlussöffnung hin den gleichen Radius hat, wie der Zuführkanal. Er schließt daher genau mit der Rundung, also dem Durchmesser des Zuführkanals 8 ab. Lediglich das als Kegelstumpf ausgebildete und durch das Innenteil gebildete Rückdrucklager für die Förderschnecke 35 ragt gar nicht oder nur zu einem geringen axialen Längenabschnitt mit seinem Konus und dem Gegendrucklager für die Förderschnecke 35 horizontal in diesen Zuführkanal 8 hinein. Durch die Ausbildung des Gegendrucklagers als Kegelstumpf bleibt beim Entleeren des Zuführkanals auf diesem Rückdrucklager kein Material liegen. Durch die zylindrische Fortführung des kreisrunden Zuführkanals mit gleichem Durchmesser auch unterhalb der Förderschnecke bis zu dem Absperrschieber ist eine saubere und schnelle Entleerung des Zuführkanals einfach möglich.

Die als Antriebsmotor 34 ausgebildete Antriebsmotoreinheit treibt die Förderschnecke 35 an und ist bei der dargestellten Ausführungsform ein steuer- oder regelbarer Elektromotor. Der Antriebsmotor 34 wird durch die SPS 25 angetrieben. Hierdurch lässt sich eine präzise Drehzahlregelung der Förderschnecke 35 mit hoher Drehzahl konstant bei linearem Regelverhalten erzielen. Außerdem ergibt sich eine sichere Reproduzierbarkeit von Einstellungen.

Die Antriebsmotoreinheit 34 ist über eine vertikale Schwenkachse, die in beabstandeten Lagern angeordnet ist, schwenkbar und durch Bajonettverschlüsse am Gehäuse 3 schnell zu arretieren, aber auch wieder zu lösen. Die Antriebsmotoreinheit 34 besitzt eine Platte, der beabstandete Andrückstücke zugeordnet sind. Die Andrückstücke wirken gegen das Innenteil des zweiteiligen Dichtkörpers und arretieren diesen in der Anschlussöffnung. Durch Wegschwenken der Antriebsmotoreinheit 34 ist somit nicht nur ein rascher Zugang und Austausch der Antriebsmotoreinheit gegeben, sondern es lässt sich auch der Dichtkörper, bestehend aus Innenteil und den Außenteil, leicht und problemlos austauschen, ggf. zusammen mit der Förderschnecke 35, so dass sich die Dosiervorrichtung auch auf unterschiedliche Materialien durch Austausch unterschiedlicher Förderschnecken 35 und/oder des Reduzierrohres bequem und schnell umrüsten lässt (siehe ebenfalls DE 10 2008 055 756 B3).

An der Unterseite des Zuführkanals 8 ist bei der dargestellten Ausführungsform ein orthogonal zur Längsachse des Zuführkanals 8 längsverschieblich angeordneter, als Leerlaufschieber ausgebildeter Absperrschieber 9 in Führungen, z. B. Gleitführungen, reibungsarm und damit leichtgängig angeordnet.

Mit den Bezugszeichen 10 und 11 sind Druckluftdüsen bezeichnet. Abweichend von der aus der Zeichnung ersichtlichen Ausführungsform können statt zwei über den Umfang des Einfülltrichters 1 auch mehrere derartiger Druckluftdüsen 10, 11 mit gleichmäßigem Winkelabstand über den Umfang des Einfülltrichters 1 zueinander angeordnet sein, oder auch nur eine Druckluftdüse. Wie aus der Zeichnung ersichtlich ist, ist die jeweilige Längsachse jeder Druckluftdüse 10 und 11 zur Längsachse 12 des Einfülltrichters 1 jeweils um einen Winkel geneigt angeordnet, derart, dass die Mündungsöffnung der jeweiligen Druckluftdüsen 10 und 11 auf die Seitenwand des Einfülltrichters 1 hingerichtet ist, und zwar bei der dargestellten Ausführungsform auf den Übergangsbereich 13 zwischen dem zylindrischen Längenabschnitt 14 des Einfülltrichters 1 und dessen konisch nach unten verlaufenden Längenabschnitt 15, so dass sich hier kein Fördergut festsetzen kann, sondern kontinuierlich stetig nach unten gefördert wird.

Das Bezugszeichen 16 bezeichnet einen Absperrschieber, der in vertikaler Richtung, also parallel zur Längsachse 12 des Einfülltrichters 1 in entgegengesetzten Richtungen A und B über einen Antriebsmotor hin und her steuerbar ist. In der Zeichnung ist die Austragsöffnung 17 der Förderschnecke 35 durch den Absperrschieber 16 freigegeben, während eine als Reinigungsöffnung ausgebildete Öffnung 18 eines unter 45 Grad mit seiner Längsachse zu der Hubrichtung A bzw. B verlaufenden Stutzens 19 über die Öffnung 18 in ein Gehäuse 20 ausmündet, in dem der Absperrschieber 16 längsverschieblich und fördermitteldichtend angeordnet ist.

Beide Absperrschieber 9 und 16 sind motorisch in entgegengesetzten Richtungen gesteuert und fördermitteldichtend in entgegengesetzten Richtungen zu bewegen. Als Antriebsmotoren kommen bevorzugt abwechselnd beidseitig durch Druckmitteldruck, insbesondere durch Druckluft, zu beaufschlagende Kolben-Zylinder-Einheiten in Betracht, deren Kolbenstangen mit dem jeweiligen Absperrschieber 9 und 16 in geeigneter Weise durch Kupplungen verbunden sind. Die Antriebsmotoren wie z. B. Kolben-Zylinder-Einheiten sind in der Zeichnung im Einzelnen nicht dargestellt. Den Antriebsmotoren, insbesondere den Kolben-Zylinder-Einheiten, wird das Druckmittel unter Druck, bevorzugt Druckluft, über Leitungen 21 bzw. 22 zugeführt, die über geeignete Steuervorrichtungen, bei der dargestellten Ausführungsform über Magnetventile 23 bzw. 24, an eine elektronisch programmierbare Steuerung 25 angeschlossen sind. Hierbei kann es sich um eine SpeicherProgrammierbare-Steuerung (SPS) handeln. Dem Magnetventil 23 ist ein Leerlaufschieber und dem Magnetventil 24 ein Testschieber zugeordnet. Die Magnetventile 23 und 24 sind über Leitungen 26 und 27 mit der elektronisch programmierbaren Steuerung 25 verbunden, die über eine Leitung 28 an eine Druckmittelquelle 29 angeschlossen ist. Bei der Druckmittelquelle kann es sich um einen motorisch angetriebenen Kompressor mit Druckspeicher handeln.

Die elektronisch programmierbare Steuerung 25 ist über eine Leitung 30 an ein Magnetventil 31 für die als Ausblasvorrichtung ausgebildeten Druckluftdüsen 10 und 11 angeschlossen. Das Magnetventil 31 steht über eine Leitung 32 mit der Ausblasvorrichtung, das heißt den Druckluftdüsen 10 und 11 in Verbindung, denen gesteuert Druckluft zugeführt wird.

Eine weitere Leitung 33 führt zu dem Antriebsmotor 34 für die Förderschnecke 35, die in einem Gehäuse 36 angeordnet ist und über eine Kupplung 37 von dem Antriebsmotor 34 angetrieben wird.

Die Magnetventile 23, 24 und 31 sind handelsübliche Mehrwegeventile.

Die Wirkungsweise ist Folgende:

Bevorzugt wird die Vorrichtung derart gereinigt, dass die Austragsöffnung 17 der Förderschnecke 35 durch den Absperrschieber 16 verschlossen wird, während der die untere Anschlussöffnung 5 verschließende Absperrschieber 9 in Offenstellung gesteuert wird. Hierzu werden über die elektronisch programmierbare Steuerung 25 die Magnetventile 23 und 24 entsprechend angesteuert, um den Antriebsmotoren der Absperrschieber 9 und 16 entsprechende Druckmittel, bevorzugt Druckluft, zuzuführen, um sie in die entsprechende Schließ- oder Offenstellung zu steuern. Danach wird innerhalb einer in der elektronisch programmierbaren Steuerung 25 festgelegten Zeitspanne über das Magnetventil 31 die Ausblasvorrichtung, das heißt die Druckluftdüsen 10 und 11 an die Druckmittelversorgung über die Leitung 32 angeschlossen und Druckluft gegen die Wand des Einfülltrichters 1 geblasen. Gleichzeitig kann der Antriebsmotor 34 in Gang gesetzt werden, so dass sich die Förderschnecke 35 dreht und die auch in die Öffnung des Gehäuses 36 einströmende Druckluft sämtliche Reste von Fördergut durch die Anschlussöffnung 5 sowie 18 und Stutzen 19 austrägt.

Die Abfolge der Offensteuerungen und Schließbewegungen der Absperrschieber 9 und 16, der Druckluftbeaufschlagung der Druckluftdüsen 10, 11 sowie die Zeitdauer der Druckluftbeaufschlagung der Druckluftdüsen 10 und 11, der Einschaltdauer des Motors 24 sind in einem änderbaren Programm der elektronisch programmierbaren Steuerung 25 abgelegt.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichen

- 1: Einfülltrichter, Zuführtrichter
- 2: Anschlussöffnung
- 3: Gehäuse
- 4: Flansch
- 5: Anschlussöffnung
- 6: "
- 7: "
- 8: Zuführkanal
- 9: Absperrschieber
- 10: Druckluftdüse
- 11: "
- 12: Längsachse des Einfülltrichters 1
- 13: Übergangsbereich
- 14: Längenabschnitt, zylindrischer
- 15: Längenabschnitt, konischer
- 16: Absperrschieber
- 17: Austragsöffnung
- 18: Öffnung, Reinigungsöffnung
- 19: Stutzen
- 20: Gehäuse
- 21: Leitung
- 22: "
- 23: Magnetventil
- 24: "
- 25: Steuerung, SPS
- 26: Leitung
- 27: "
- 28: "
- 29: Druckmittelquelle
- 30: Leitung
- 31: Magnetventil
- 32: Leitung
- 33: "
- 34: Antriebsmotor, Antriebsmotoreinheit
- 35: Förderschnecke
- 36: Gehäuse
- 37: Kupplung
- 38: Längsachse
- A: Hubrichtung
- B: "

## Patentansprüche

1. Verfahren zum Reinigen von Dosiervorrichtungen, die zum Beschicken von Vorrichtungen - zum Beispiel Extruder, Spritzgussmaschinen oder dergleichen - mit Schüttgütern - Pellets, Spänen, Granulaten, Pulvern, Flakes, Körnern, Mehl oder dergleichen - dienen, wobei die betreffende Dosiervorrichtung ein Gehäuse (3) mit Einfülltrichter (1) für das Schüttgut aufweist, und das Gehäuse (3) auf gegenüberliegenden Seiten kreisrunde Anschlussöffnungen (2, 5) aufweist, deren Mittelpunkte jeweils paarweise koaxial zueinander angeordnet sind und die sprunglos in Kanäle mit jeweils gleichem Durchmesser einmünden, deren Längsachsen entsprechend jeweils paarweise koaxial zueinander angeordnet sind, wobei von oben das Schüttgut über einen Anschlussstutzen mit gleichem Durchmesser sprunglos in einen Zuführkanal (8) zuführbar ist und seitlich am Gehäuse (3) eine Antriebsmotoreinheit (34) für eine Förderschnecke (35) angeordnet ist, die fliegend, z. B. an einem insbesondere kegelstumpfförmigen Dichtkörper angeordnet ist, der mit einem Außenteil sprunglos entsprechend der Durchdringungskurve des hier vorgesehenen seitlichen Kanals und des ihn mit seiner Längsachse koaxial durchdringenden vertikalen Kanals mit der Innenwand des vertikalen Zuführkanals (8) abschließt, und mit einem in Achsrichtung der Förderschnecke (35), im Gehäuse (3) angeordneten Innenteil axiale und radiale Beanspruchungen der Förderschnecke (35) aufnimmt, wobei der dem Einfülltrichter (1) diametral gegenüberliegenden Anschlussöffnung (2) ein in Offenstellung und in Absperrstellung steuerbarer Absperrschieber (9) zugeordnet ist und der Austragsöffnung (17) der Förderschnecke (35) ebenfalls ein derartiger in Absperrstellung und in Offenstellung (A - B) steuerbarer Absperrschieber (16) zugeordnet ist, der beim Steuern in Absperrstellung (B) der Austragsöffnung (17) der Förderschnecke (35) eine als Reinigungsöffnung ausgebildete Öffnung (18) freigibt, die in einen Stutzen (19) ausmündet, **dadurch gekennzeichnet, dass** jedem Absperrschieber (9, 16) ein Antriebsmotor zum Steuern der Auf- und Absperrbewegungen der Schieber (9, 16) zugeordnet ist, und dass zwecks Reinigung unter gleichzeitigem Drehantrieb der Förderschnecke (35) in den Einfülltrichter (1) und damit in den Innenraum der Dosiervorrichtung und zur Förderschnecke (35) Druckluft steuerbar oder regelbar eingeleitet wird.

2. Verfahren nach Anspruch 1, **dadurch gekennzeichnet, dass** die Druckluft zugeführt wird, wenn der die Austragsöffnung (17) der Förderschnecke (35) verschließende Absperrschieber (16) sich in Absperrstellung befindet, während der die untere Anschlussöffnung (5) und die Öffnung (18) verschlieβende Absperrschieber (16) in Offenstellung gesteuert wird.

3. Verfahren nach Anspruch 1 oder 2, **dadurch gekennzeichnet, dass** vor Beginn der Reinigung die Austragsöffnung (17) der Förderschnecke (35) durch den Absperrschieber (16) verschlossen und die Anschlussöffnung (5) und die Öffnung (18) durch den jeweiligen Absperrschieber (9 bzw. 16) freigegeben wird.

4. Verfahren nach Anspruch 1 oder einem der darauffolgenden Ansprüche, **dadurch gekennzeichnet, dass** die Antriebe der Absperrschieber (9, 16) bzw. (34) und für die Förderschnecke (35) in eine programmierbare Steuerung (25) einbezogen sind, wodurch das Auf- und Zusteuern der Absperrschieber (9, 16) und die Zuführung von Druckluft in den Zuführtrichter (1) sowie für den Drehantrieb der Förderschnecke sowie die Bewegungen der Absperrschieber (9, 16) durch ein änderbares Programm der Steuerung (25) folgerichtig abgerufen wird.

5. Vorrichtung zum Durchführung des Verfahrens nach Anspruch 1 oder einem der darauffolgenden Ansprüche, mit einer Dosiervorrichtung, die zum Beschicken von Vorrichtungen - zum Beispiel Extruder, Spritzgussmaschinen oder dergleichen - mit Schüttgütern - Pellets, Spänen, Granulaten, Pulvern, Flakes, Körnern, Mehl oder dergleichen - dienen, wobei die betreffende Dosiervorrichtung ein Gehäuse (3) mit Einfülltrichter (1) für das Schüttgut aufweist, und das Gehäuse (3) auf zwei gegenüberliegenden Seiten kreisrunde Anschlussöffnungen (2, 5) aufweist, deren Mittelpunkte jeweils paarweise koaxial zueinander angeordnet sind und die zum Beispiel sprunglos in Kanäle mit jeweils gleichem Durchmesser einmünden, deren Längsachsen entsprechend jeweils paarweise koaxial zueinander angeordnet sind, wobei von oben das Schüttgut über einen Anschlussstutzen mit gleichem Durchmesser sprunglos in einen Zuführkanal (8) zuführbar ist und seitlich am Gehäuse (3) eine Antriebsmotoreinheit (34) für eine Förderschnecke (35) angeordnet ist, die fliegend, z. B. an einem insbesondere kegelstumpfförmigen Dichtkörper, angeordnet ist, der mit einem Außenteil sprunglos entsprechend der Durchdringungskurve des hier vorgesehenen seitlichen Kanals und des ihn mit seiner Längsachse koaxial durchdringenden vertikalen Kanals mit der Innenwand des vertikalen Zuführkanals (8) abschließt, und mit einem in Achsrichtung der Förderschnecke (35), im Gehäuse (3) angeordneten Innenteil axiale und radiale Beanspruchungen der Förderschnecke (35) aufnimmt, wobei der dem Einfülltrichter (1) diametral gegenüberliegenden Anschlussöffnung (5) ein in Offenstellung und in Absperrstellung steuerbarer Absperrschieber (9) zugeordnet ist und der Austragsöffnung (17) der Förderschnecke (35) ebenfalls ein derartiger in Absperrstellung und in Offenstellung steuerbarer Absperrschieber (16) zugeordnet ist, der beim Steuern in Absperrstellung der Austragsöffnung (17) der Förderschnecke (35) eine Öffnung (18) freigibt, die in einen Stutzen (19) ausmündet, **dadurch gekennzeichnet, dass** der Austragsöffnung (17) für die Förderschnecke (35) und der Anschlussöffnung (5) sowie der Öffnung (18) für das Gehäuse (3) je ein zu der jeweiligen Gehäuseachse orthogonal bewegbarer, zwangsgeführter Absperrschieber (9, 16) zugeordnet ist, dem je eine abwechselnd beidseitig durch Druckmitteldruck, insbesondere durch Druckluft, zu beaufschlagende Kolben-Zylinder-Einheit zugeordnet ist, die die Bewegungen des betreffenden Absperrschiebers (9, 16) steuert, und dass dem Einfülltrichter (1) eine oder mehrere, auf die Seiteriwände des Einfülltrichters (1) hingerichtete Druckluftdüse bzw. Druckluftdüsen (10, 11) zugeordnet ist bzw. sind, durch die gesteuert Druckluft zum Reinigen des Dosiergerätes von einer Druckmittelquelle zuführbar ist.

6. Steuerung für eine Vorrichtung nach Anspruch 5, für die Reinigung einer Dosiervorrichtung zum Beschicken von Vorrichtungen - zum Beispiel Extruder, Spritzgussmaschinen oder dergleichen - mit Schüttgütern - Pellets, Spänen, Granulaten, Pulvern, Flakes, Körnern, Mehl oder dergleichen - dienen, wobei die betreffende Dosiervorrichtung ein Gehäuse (3) mit Einfülltrichter (1) für das Schüttgut aufweist, und das Gehäuse (3) auf zwei gegenüberliegenden Seiten kreisrunde Anschlussöffnungen (2, 5) aufweist, deren Mittelpunkte jeweils paarweise koaxial zueinander angeordnet sind und die zum Beispiel sprunglos in Kanäle mit jeweils gleichem Durchmesser einmünden, deren Längsachsen entsprechend jeweils paarweise koaxial zueinander angeordnet sind, wobei von oben das Schüttgut über einen Anschlussstutzen mit gleichem Durchmesser sprunglos in einen Zuführkanal (8) zuführbar ist und seitlich am Gehäuse (3) eine Antriebsmotoreinheit (34) für eine Förderschnecke (35) angeordnet ist, die z. B. fliegend an einem insbesondere kegelstumpfförmigen Dichtkörper angeordnet ist, der mit einem Außenteil sprunglos entsprechend der Durchdringungskurve des hier vorgesehenen seitlichen Kanals und des ihn mit seiner Längsachse koaxial durchdringenden vertikalen Kanals mit der Innenwand des vertikalen Zuführkanals (8) abschließt, und mit einem in Achsrichtung der Förderschnecke (35), im Gehäuse (3) angeordneten Innenteil axiale und radiale Beanspruchungen der Förderschnecke (35) aufnimmt, wobei der dem Einfülltrichter (1) diametral gegenüberliegenden Anschlussöffnung (5) ein in Offenstellung und in Absperrstellung steuerbarer Absperrschieber (9) zugeordnet ist und der Austragsöffnung (17) der Förderschnecke (35) ebenfalls ein derartiger in Absperrstellung und in Offenstellung steuerbarer Absperrschieber (16) zugeordnet ist, der beim Steuern in Absperrstellung der Austragsöffnung (17) der Förderschnecke (35) eine Öffnung (18) freigibt, die in einen Stutzen (19) ausmündet, **dadurch gekennzeichnet, dass** die Bewegungsabläufe der Absperrschieber (9, 16) einerseits und Druckluftförderung in den Einfülltrichter (1) zwecks Reinigung der Vorrichtung sowie das Ein- und Ausschalten der Drehbewegung der Förderschnecke (35) andererseits und die Dauer der Bewegungen bzw. der Stillstandzeiten in eine programmierbare, elektronische Steuerung (SPS) abgelegt sind, die durch Betätigen eines Schalters in Gang setzbar ist.

## Claims

1. Method of cleaning metering devices used to charge equipment such as extruders, injection moulding machines and the like with bulk materials such as pellets, chips, granulates, powders, flakes, grains, flour and the like, where the said metering device incorporates a housing (3) with a filling hopper (1) for the bulk material and the housing (3) incorporates on opposing sides circular connecting holes (2, 5) the centre points of which are disposed in pairs coaxially and which open steplessly into ducts each of the same diameter the longitudinal axes of which ducts are correspondingly disposed in pairs coaxially and where the bulk material can be fed steplessly from above into a feed duct (8) via a connecting nozzle of the same diameter and a drive motor unit (34) for a conveyor screw (35) is disposed on the side of the housing (3) which screw is disposed cantileveredly e.g. on a preferably truncated-cone-shaped sealing member which ends in an outer member steplessly corresponding to the penetration curve of the duct provided for here on the side and the vertical duct running coaxially through it lengthwise and level with the inner wall of the vertical feed duct (8) and which by means of an inner member disposed in the housing (3) in the axial direction of the conveyor screw (35) absorbs axial and radial loads from the conveyor screw (35), where a stop slide valve (9) which can be moved to an open position and a closed position is assigned to the connecting hole (2) disposed diametrically opposite the filling hopper (1) and an identical stop slide valve (16) which can be moved to a closed position and an open position (A - B) and which while moving to the closed position (B) of the discharge hole (17) of the conveyor screw (35) opens a hole (18) designed as a cleaning hole and ending in a nozzle (19) is likewise assigned to the discharge hole (17) of the conveyor screw (35), **characterised in that** a drive motor is assigned to each stop slide valve (9, 16) to control the opening and closing movements of the slide valves (9, 16) and **in that** for the purpose of cleaning while the conveyor screw (35) is still rotating compressed air is controllably or regulably admitted into the filling hopper (1) and thus into the inner chamber of the metering device and to the conveyor screw (35).

2. Method in accordance with claim 1, **characterised in that** the compressed air is admitted when the stop slide valve (16) closing the discharge hole (17) of the conveyor screw (35) is in the closed position, while the stop slide valve (16) closing the lower connecting hole (5) and hole (18) is being moved to the open position.

3. Method in accordance with claim 1 or 2, **characterised in that** before before cleaning begins the discharge hole (17) of the conveyor screw (35) is closed by the stop slide valve (16) and the connecting hole (5) and hole (18) is opened by the respective stop slide valve (9 or 16).

4. Method in accordance with claim 1 or any one of the claims following it, **characterised in that** the drives to the stop slide valves (9, 16) or (34) and for the conveyor screw (35) are incorporated into a programmable control system (25), by means of which the closing and opening of the stop slide valves (9, 16) and the admission of compressed air into the feed hopper (1) and for the rotary drive of the conveyor screw and the movements of the stop slide valves (9, 16) are called up logically by an alterable program for the control system (25).

5. Device for applying the method in accordance with claim 1 or any one of the claims following it, having a metering device which is used to charge equipment such as extruders, injection moulding machines or the like with bulk materials such as pellets, chips, granulates, powders, flakes, grains, flour or the like, where the said metering device incorporates a housing (3) with a filling hopper (1) for the bulk material and the housing (3) incorporates on two opposing sides circular connecting holes (2, 5) the centre points of which are disposed coaxially in pairs and which, for example, lead steplessly into ducts of the same diameter and the longitudinal axes of which are correspondingly disposed coaxially in pairs, where the bulk material can be fed from above steplessly into a feed duct (8) via a connecting nozzle of the same diameter and on the side of the housing (3) a drive motor unit (34) for a conveyor screw (35) is disposed which screw is disposed cantileveredly e.g. on a preferably truncated-cone-shaped sealing member which ends in an outer member steplessly corresponding to the penetration curve of the duct provided for here at the side and the vertical duct running coaxially through it lengthwise and level with the inner wall of the vertical feed duct (8) and which by means of an inner member disposed in the housing (3) in the axial direction of the conveyor screw (35) absorbs axial and radial loads from the conveyor screw (35), where a stop slide valve (9) which can be moved to an open position and to a closed position is assigned to the connecting hole (5) disposed diametrically opposite the filling hopper (1) and an identical stop slide valve (16) which can be moved to a closed position and to an open position and which while moving to the closed position of the discharge hole (17) of the conveyor screw (35) opens a hole (18) designed as a cleaning hole and ending in a nozzle (19) is likewise assigned to the discharge hole (17) of the conveyor screw (35), **characterised in that** a positively guided stop slide valve (9, 16) which can be moved at right angles to the respective housing axis is assigned to the discharge hole (17) for the conveyor screw (35) and to the connecting hole (5) and hole (18) for the housing (3) and to each of which a piston/cylinder unit to which pressure from a compressed medium, in particular compressed air, can be applied on either side by turns and which controls the movements of the respective stop slide valve (9, 16) is assigned and **in that** one or more compressed air jets (10, 11) which is or are directed at the side walls of the filling hopper (1) and through which compressed air can be admitted under control from a compressed medium source to clean the metering device is or are assigned to the filling hopper (1).

6. Control system for a device in accordance with claim 5 for cleaning a metering device which is used to charge equipment such as extruders, injection moulding machines or the like with bulk materials such as pellets, chips, granulates, powders, flakes, grains, flour or the like, where the said metering device incorporates a housing (3) with a filling hopper (1) for the bulk material and the housing (3) incorporates on two opposing sides circular connecting holes (2, 5) the centre points of which are disposed coaxially in pairs and which, for example, lead steplessly into ducts of the same diameter and the longitudinal axes of which are correspondingly disposed coaxially in pairs, where the bulk material can be fed from above steplessly into a feed duct (8) via a connecting nozzle of the same diameter and a drive motor unit (34) for a conveyor screw (35) is disposed on the side of the housing (3) which screw is disposed cantileveredly, e.g. on a preferably truncated-cone-shaped sealing member which ends in an outer member steplessly corresponding to the penetration curve of the duct provided for here at the side and the vertical duct running coaxially through it lengthwise and level with the inner wall of the vertical feed duct (8) and which by means of an inner member disposed in the housing (3) in the axial direction of the conveyor screw (35) absorbs axial and radial loads from the conveyor screw (35), where a stop slide valve (9) which can be moved to a closed position is assigned to the connecting hole (5) disposed diametrically opposite the filling hopper (1) and an identical stop slide valve (16) which can be moved to a closed position and to an open position and which while moving to the closed position of the discharge hole (17) of the conveyor screw (35) opens a hole (18) designed as a cleaning hole and ending in a nozzle (19) is likewise assigned to the discharge hole (17) of the conveyor screw (35), **characterised in that** the sequence of movements of the stop slide valves (9, 16), on the one hand, and the admission of compressed air into the filling hopper (1) for cleaning the device and the switching on and off of the rotary movement of the conveyor screw (35), on the other, and the duration of the movements or stoppage times are filed in a programmable logic control system (PLC) which can be started by operating a switch.

## Revendications

1. Procédé pour nettoyer des dispositifs de dosage servant eux-mêmes à charger des dispositifs dont par exemple des extrudeuses, machines de moulage injecté ou similaires avec des produits en vrac tels que des pellets, copeaux, granulés, poudres, flocons, grains, farines ou similaires, sachant que le dispositif de dosage concerné présente un carter (3) avec trémie de remplissage (1) du produit en vrac, et que le carter (3) présente sur des côtés opposés des orifices de raccordement (2, 5) circulaires dont les centres sont agencés chaque fois coaxialement par paires et qui aboutissent de manière fluide dans des canaux présentant respectivement le même diamètre et dont les axes longitudinaux sont agencés coaxialement par paires, sachant que le produit en vrac peut être amené par le haut de manière fluide, dans un canal d'amenée (8), via un embout de raccordement présentant le même diamètre, et que latéralement contre le carter (3) a été agencée une unité motorisée (34) servant à entraîner une vis convoyeuse sans fin (35) agencée « volante » par exemple contre un corps d'étanchéité en particulier tronconique dont une partie extérieure comble de manière fluide - conformément à la courbe de traversée du canal latéral prévu ici et du canal vertical dont l'axe longitudinal le traverse coaxialement - la paroi intérieure du canal d'amenée vertical (8), et dont une partie intérieure, agencée dans le carter (3) dans le sens axial de la vis convoyeuse sans fin (35), absorbe les contraintes axiales et radiales de cette dernière (35), sachant qu'à l'orifice de raccordement (2) diamétralement opposé à la trémie de remplissage (1) est affecté un tiroir de fermeture (9) pilotable jusqu'en position ouverte et jusqu'en position fermée, et qu'à l'orifice de déversement (17) de la vis convoyeuse sans fin (35) est également affecté un tiroir de fermeture (16) de ce type pilotable jusqu'en position fermée et jusqu'en position ouverte (A - B), lequel tiroir, lorsque piloté jusqu'en position de fermeture (B) de l'orifice de déversement (17) de la vis convoyeuse sans fin (35), libère un orifice configuré en orifice de nettoyage qui débouche dans un embout (19), **caractérisé en ce qu'**à chaque tiroir de fermeture (9, 16) est affecté un moteur d'entraînement servant à piloter les mouvements d'ouverture et de fermeture des tiroirs (9, 16), et **en ce qu'**aux fins du nettoyage tandis que la vis convoyeuse sans fin (35) continue d'être entraînée en rotation, de l'air comprimé pilotable ou régulable est introduit dans la trémie de remplissage (1) et donc dans le compartiment intérieur du dispositif de dosage et en direction de la vis convoyeuse sans fin (35).

2. Procédé selon la revendication 1, **caractérisé en ce que** l'air comprimé est amené lorsque le tiroir de fermeture (16) qui obture l'orifice de déversement (17) de la vis convoyeuse sans fin (35) se trouve en position fermée, tandis que le tiroir de fermeture (16) qui obture l'orifice de raccordement (5) inférieur et l'orifice (18) est piloté jusqu'en position ouverte.

3. Procédé selon la revendication 1 ou 2, **caractérisé en ce qu'**avant d'entamer le nettoyage, l'orifice de déversement (17) de la vis convoyeuse sans fin (35) est obturé par le tiroir de fermeture (16) et que l'orifice de raccordement (5) l'orifice (18) sont rendus accessibles par le tiroir de fermeture respectif (9 et 16).

4. Procédé selon la revendication 1 ou l'une des revendications suivantes, caractérisé en que les entraînements des tiroirs de fermeture (9, 16) et (34) ainsi que de la vis convoyeuse sans fin (35) sont intégrés dans une commande programmable (25), ce qui permet, au moyen d'un programme modifiable de la commande (25), d'ordonner selon la chronologie correcte l'ouverture et la fermeture des tiroirs de fermeture (9, 16) et l'amenée d'air comprimé dans la trémie d'amenée (1) ainsi que pour l'entraînement rotatif de la vis convoyeuse sans fin ainsi que pour les mouvements des tiroirs de fermeture (9, 16).

5. Dispositif pour réaliser le procédé selon la revendication 1 ou l'une des revendications suivantes, comprenant un dispositif de dosage servant à charger des dispositifs, par exemple des extrudeuses, machines de moulage injecté ou similaires, avec des produits en vrac (pellets, copeaux, granulés, poudres, flocons, grains, farines ou similaires), sachant que le dispositif de dosage concerné présente un carter (3) avec trémie de remplissage (1) du produit en vrac, et que le carter (3) présente sur deux côtés opposés des orifices de raccordement (2, 5) circulaires dont les centres sont agencés coaxialement par paires et qui aboutissent par exemple de manière fluide dans des canaux présentant respectivement le même diamètre, canaux dont les axes longitudinaux sont agencés coaxialement par paires, sachant que le produit en vrac peut être amené par le haut de manière fluide dans un canal d'amenée (8), via un embout de raccordement présentant le même diamètre, et que latéralement contre le carter (3) a été agencée une unité motorisée (34) servant à entraîner une vis convoyeuse sans fin (35) agencée « volante » par exemple contre un corps d'étanchéité en particulier tronconique dont une partie extérieure comble de manière fluide - conformément à la courbe de traversée du canal latéral prévu ici et du canal vertical dont l'axe longitudinal le traverse coaxialement - la paroi intérieure du canal d'amenée vertical (8), et dont une partie intérieure agencée dans le carter (3) dans le sens axial de la vis convoyeuse sans fin (35), absorbe les contraintes axiales et radiales de cette dernière (35), sachant qu'à l'orifice de raccordement (5) diamétralement opposé à la trémie de remplissage (1) est affecté un tiroir de fermeture (9) pilotable jusqu'en position ouverte et jusqu'en position fermée, et qu'à l'orifice de déversement (17) de la vis convoyeuse sans fin (35) est également affecté un tiroir de fermeture (16) de ce type pilotable jusqu'en position fermée et jusqu'en position ouverte, lequel tiroir, lorsque piloté jusqu'en position fermeture de l'orifice de déversement (17) de la vis convoyeuse sans fin (35), donne accès à un orifice (18) qui débouche dans un embout (19), **caractérisé en ce qu'**à l'orifice de déversement (17) de la vis convoyeuse sans fin (35), à l'orifice de raccordement (5) et à l'orifice (18) du carter (3) est respectivement affecté un tiroir de fermeture (9, 16) à guidage forcé déplaçable à angle droit par rapport à l'axe de carter respectif, tiroir auquel est affecté une unité à piston et cylindre à double effet à mettre sous la pression d'un fluide, d'air comprimé en particulier, unité qui pilote les mouvements du tiroir de fermeture concerné (9, 16), et **en ce qu'**à la trémie de remplissage (1) est / sont affectée(s) une / plusieurs buse(s) à air comprimé (10, 11) pointant vers les parois latérales de la trémie de remplissage (1), qui permet(tent), afin de nettoyer l'appareil de dosage, d'amener de l'air comprimé de manière pilotée depuis une source de fluide sous pression.

6. Commande pour un dispositif selon la revendication 5, destinée à nettoyer un dispositif de dosage servant à charger des dispositifs, par exemple des extrudeuses, machines de moulage injecté ou similaires, avec des produits en vrac (pellets, copeaux, granulés, poudres, flocons, grains, farines ou similaires), sachant que le dispositif de dosage concerné présente un carter (3) avec trémie de remplissage (1) du produit en vrac, et que le carter (3) présente sur deux côtés opposés des orifices de raccordement (2, 5) circulaires dont les centres sont agencés coaxialement par paires et qui aboutissent par exemple de manière fluide dans des canaux présentant respectivement le même diamètre, canaux dont les axes longitudinaux sont agencés coaxialement par paires, sachant que le produit en vrac peut être amené par le haut de manière fluide dans un canal d'amenée (8), via un embout de raccordement présentant le même diamètre, et que latéralement contre le carter (3) a été agencée une unité motorisée (34) servant à entraîner une vis convoyeuse sans fin (35) agencée par exemple « volante » contre un corps d'étanchéité en particulier tronconique dont une partie extérieure comble de manière fluide - conformément à la courbe de traversée du canal latéral prévu ici et du canal vertical dont l'axe longitudinal le traverse coaxialement - la paroi intérieure du canal d'amenée vertical (8), et dont une partie intérieure agencée dans le carter (3) dans le sens axial de la vis convoyeuse sans fin (35) absorbe les contraintes axiales et radiales de cette dernière (35), sachant qu'à l'orifice de raccordement (5) diamétralement opposé à la trémie de remplissage (1) est affecté un tiroir de fermeture (9) pilotable jusqu'en position ouverte et jusqu'en position fermée, et qu'à l'orifice de déversement (17) de la vis convoyeuse sans fin (35) est également affecté un tiroir de fermeture (16) de ce type pilotable jusqu'en position fermée et jusqu'en position ouverte, lequel tiroir, lorsque piloté jusqu'en position de fermeture de l'orifice de déversement (17) de la vis convoyeuse sans fin (35), donne accès à un orifice (18) qui débouche dans un embout (19), caractérisé en que d'une part les mouvements séquentiels des tiroirs de fermeture (9, 16), et d'autre part le refoulement de l'air comprimé vers la trémie de remplissage (1) afin de nettoyer le dispositif ainsi que d'activer et désactiver le mouvement rotatif de la vis sans fin convoyeuse (35), et que la durée aussi des mouvements et temps d'immobilité est mémorisée dans un automate programmable industriel (API) électronique qu'il est possible d'activer en actionnant un interrupteur.
